# EUROPÄISCHE PATENTSCHRIFT

(11) **EP 1 453 631 B1**
(45) Veröffentlichungstag und Bekanntmachung des Hinweises auf die Patenterteilung: **22.02.2006**
(21) Anmeldenummer: 02791708.7
(22) Anmeldetag: 25.11.2002
(51) Int. Cl.: B23B 41/02, B23Q 1/48, B23Q 7/04, B23Q 11/00

(54) **TIEFBOHREINRICHTUNG**
DEEP DRILLING DEVICE
DISPOSITIF DE FORAGE PROFOND

(30) Priorität: 03.12.2001 DE 10160037
(43) Veröffentlichungstag der Anmeldung: 08.09.2004
(73) Patentinhaber: TBT Tiefbohrtechnik GmbH, 72581 Dettingen/Erms (DE)
(72) Erfinder: RANDECKER, Hermann, 72581 Dettingen (DE); WURSTER, Fritz, 72581 Dettingen (DE)
(74) Vertreter: Patentanwälte Ruff, Wilhelm, Beier, Dauster & Partner
(86) Internationale Anmeldenummer: PCT/EP2002/013192
(87) Internationale Veröffentlichungsnummer: WO 2003/047796

(56) Entgegenhaltungen:
- DE-A- 4 022 458
- US-A- 5 759 140
- US-B1- 6 203 478
- US-B1- 6 228 007
- US-B1- 6 287 245

## Beschreibung

Die Erfindung betrifft eine Tiefbohreinrichtung zum Bohren von Bohrungen in Werkstücken, insbesondere Kurbelwellen, wobei die Bohrungen an unterschiedlichen Positionen und/oder in unterschiedlichen Ausrichtungen relativ zu einer Werkstücklängsachse einbringbar sind, gemäss dem Oberbegriff des Anspruchs 1 (siehe, z. B, US - 6,228, 007-B).

Bekanntlich werden Kurbelwellen für Verbrennungsmotoren von Luft-oder Landfahrzeugen, Schiffen oder stationären Einrichtungen häufig mit einer Vielzahl von Bohrungen versehen, die an unterschiedlichen Positionen und/oder in unterschiedlichen Ausrichtungen relativ zur Kurbelwellenlängsachse liegen und beispielsweise als Ölbohrungen dienen können. Bei der Massenherstellung derartiger Werkstücke werden häufig Transferstraßen mit mehreren Arbeitsstationen genutzt, wobei in jeder Arbeitsstation ein oder mehrere Löcher bestimmter Ausrichtung und Position in das Werkstück eingebracht werden. Eine Umrüstung derartiger Transferstraßen zur Fertigung von Werkstücken, bei denen die Bohrungen bzgl. Ausrichtung und/oder Position anders liegen, ist kompliziert, zeitaufwendig und teuer. Insbesondere für die Fertigung von kleineren Serien besteht daher seit langem der Wunsch nach flexibler einsetzbaren Einrichtungen, die vorzugsweise auch bzgl. ihres Platzbedarfes günstiger sind als Transferstraßen.

Es sind schon Vorrichtungen bekannt, die eine Verdrehung der Kurbelwelle um ihre Längsachse und eine Verschwenkung der Längsachse um eine senkrecht zu dieser Längsachse ausgerichtete Achse ermöglichen, um die Bohrung unterschiedlich ausgerichteter und/oder positionierter Bohrungen in einer speziell ausgelegten Tiefbohreinrichtung zu ermöglichen.

Eine Einrichtung dieser Art, die eine Drehung der Kurbelwelle um ihre Längsachse und eine einseitige Schwenkung der Kurbelwelle aus einer horizontalen Grundposition um eine horizontale Kippachse vorsieht, um Bohrungen unterschiedlicher Ausrichtung und/oder Position zu ermöglichen, ist z.B. im US-Patent US 5,759,140 gezeigt. Die Konstruktion dieser Anlage ist aufwendig und sie hat eine beträchtliche Baugröße. Ihre Handhabung ist umständlich.

Eine andere Einrichtung der genannten Art ist im US-Patent US 6,203,478 gezeigt. Die Längsachsen der Kurbelwellen sind hier horizontal ausgerichtet und um eine vertikale Drehachse verschwenkbar. Die zugehörige Tiefbohreinheit, welche die Tiefbohrwerkzeuge trägt, hat vier unabhängig voneinander betätigbare Bewegungsachsen, wovon zwei parallel zu den horizontalen Spindelachsen verlaufen.

Eine weitere gattungsgemäße Vorrichtung ist aus der EP 1 052 048 (=US-6,228, 007-B) bekannt. Sie umfasst einen Werkstückträger, der mindestens eine Kurbelwelle mit horizontal verlaufender Längsachse trägt und an einem um eine vertikale Achse verschwenkbaren Drehteller befestigt ist. Die Relativbewegungen zwischen Tiefbohrwerkzeugen und Werkstücken in einer senkrecht zu den Spindelachsen verlaufenden Horizontalrichtung werden durch Horizontalverschiebung des Werkstückträgers bewirkt. Besondere Maßnahmen für den Werkzeugwechsel sind angegeben.

Eine weitere gattungsgemäße Tiefbohreinrichtung ist aus der Deutschen Patentanmeldung DE 199 38 856 bekannt. Sie umfasst eine Tiefbohreinheit mit mindestens einem Spindelstock mit horizontaler Spindelachse und eine von der Tiefbohreinheit gesonderte Werkstückhalteeinheit, die die Kurbelwellen mit horizontaler Werkstücklängsachse hält und sie um eine vertikale Drehachse drehen kann. Die Werkstückhalteeinheit ist entlang einer parallel zu den Spindelachsen verlaufenden Achse verschiebbar, wodurch besonders günstige Werkstückbewegungen relativ zu den Werkzeugen ermöglicht werden. Der Werkstückhalteeinheit sind Hilfseinrichtungen zugeordnet, die einen schnellen, störungsarmen und sauberen Bearbeitungsprozess ermöglichen. Insbesondere sind Abdichteinrichtungen vorgesehen, um die Durchtrittsstellen von Tiefbohrwerkzeugen beim Bohren des Werkstückes abzudichten. Für jeden zu bearbeitenden Bearbeitungsabschnitt der Kurbelwelle, insbesondere für jedes zu bohrende Hauptlager und Hublager, ist eine eigene Abdichteinrichtung vorgesehen, die mehrere um die Werkstückmantelfläche anlegbare Abdichtschalen umfasst. Die einzelnen Abdichteinrichtungen können an einer parallel zur Werkstücklängsachse verlaufenden Führung begrenzt manuell axial verschoben werden, um eine Anpassung an unterschiedliche Kurbelwellengeometrien zu ermöglichen.

Der Erfindung liegt die Aufgabe zugrunde, eine Tiefbohreinrichtung der eingangs genannten Art zu schaffen, die einen hohen Durchsatz zu bearbeitender Werkstücke bei geringem Betreuungsaufwand und hoher Betriebssicherheit erlaubt. Insbesondere soll eine schnelle Anpassung der Tiefbohreinrichtungen an unterschiedliche Werkstückgeometrien ermöglicht und die Präzision und Betriebssicherheit des Bearbeitungsprozesses weiter erhöht werden.

Diese Aufgabe wird erfindungsgemäß durch eine Tiefbohseinrichtung mit den Merkmalen von Anspruch 1 gelöst.

Eine erfindungsgemäße Tiefbohreinrichtung hat zwei Funktionseinheiten, die jeweils sehr einfach und übersichtlich aufgebaut sein können und auf zweckmäßige Weise zusammenwirken. Die Funktionseinheiten können auf einem gemeinsamen Maschinengestell oder, insbesondere bei Anlagen für größere Werkstücke, auf zwei gesonderten Maschinengestellen angebracht sein. Eine Tiefbohreinheit hat mindestens einen Spindelstock mit mindestens einer durch einen Spindelantrieb um eine Spindelachse (Z-Achse) drehbaren Arbeitsspindel zur Aufnahme eines parallel zur Spindelachse (in Z-Richtung) verschiebbaren Tiefbohrwerkzeuges. Die Spindelachse verläuft vorzugsweise horizontal.

Eine von der Tiefbohreinheit gesonderte Werkstückhalteeinheit hat eine erste Teileinrichtung zum Halten mindestens eines Werkstückes und zum Drehen des Werkstückes um die Werkstücklängsachse (A-Achse). Eine zweite Teileinrichtung dient zur Drehung des Werkstückes, insbesondere der ersten Teileinrichtung, um eine senkrecht zur Werkstücklängsachse ausgerichtete Drehachse (B-Achse). Die Werkstückhalteeinheit beinhaltet somit alle Funktionen, die zum Schwenken des Werkstückes erforderlich sind, wobei durch Drehungen um die A-Achse unterschiedliche Umfangsabschnitte des Werkstückes dem Tiefbohrwerkzeug zugewandt werden können und durch Drehungen um die B-Achse unterschiedliche Kippwinkel der Bohrungen relativ zur Werkstücklängsachse einstellbar sind. Insbesondere bei Anlagen für größere Werkstücke kann zur Vermeidung übermäßig großer Axialbewegungen vorgesehen sein, auch die werkzeugtragenden Teile der Tiefbohreinheit um eine vertikale Achse (B2-Achse) verschwenkbar auszubilden.

Weiterhin sind zur Relatiwerschiebung von Werkstück und Tiefbohrwerkzeug erste, zweite und dritte Positioniereinrichtungen vorgesehen, um Parallelverschiebungen zwischen Werkstück und Tiefbohrwerkzeug bzgl. orthogonaler Achsen zu ermöglichen.

Erfindungsgemäße Tiefbohreinrichtungen zeichnen sich dadurch aus, dass der Werkstückhalteeinheit mindestens eine Manipulatoreinrichtung zugeordnet ist, die innerhalb eines mehrere Bearbeitungsabschnitte des Werkstückes umfassenden Arbeitsbereiches parallel zur Werkstücklängsachse an vorgebbare Axialpositionen des Werkstückes verfahrbar ist. Die Manipulatoreinrichtung ist zur Wechselwirkung mit dem Werkstück im Bereich der jeweiligen Axialposition ausgebildet und erlaubt somit eine Behandlung des Werkstückes im Bereich der ausgewählten Axialposition vor, während und/oder nach einem im Bereich dieser Axialposition durchgeführten Bohrvorgang. Da der Arbeitsbereich einer Manipulatoreinrichtung mehrere Bearbeitungsabschnitte eines Werkstückes erfasst, beispielsweise mehrere nebeneinander liegende Lagerabschnitte einer Kurbelwelle, können diese Manipulationen an mehreren Bearbeitungsabschnitten mit nur einer Manipulationseinrichtung vorgenommen werden, die entsprechend zum gewünschten Bearbeitungsabschnitt, vorzugsweise stufenlos, verfahrbar ist.

Obwohl mehrere, unterschiedlich oder im wesentlichen gleich aufgebaute Manipulatoreinrichtungen nebeneinander für mehrere nebeneinander liegende Arbeitsbereiche vorgesehen sein können, ist es bevorzugt, wenn nur eine Manipulatoreinrichtung vorgesehen ist, die innerhalb eines alle Bearbeitungsabschnitte des Werkstückes umfassenden Arbeitsbereichs verfahrbar ist. Der Arbeitsbereich kann insbesondere die gesamte zu bearbeitende Länge einer Kurbelwelle umfassen. Dadurch reduziert sich der Umfang an erforderlichen Verschleißteilen und Umrüstteilen beim Übergang zwischen unterschiedlichen Werkstückgeometrien erheblich. Im Vergleich zu herkömmlichen Tiefbohreinrichtungen, bei denen beispielsweise für jeden Lagerabschnitt einer Kurbelwelle eine gesonderte Abdichteinrichtung vorgesehen sein kann, reduziert sich die Zahl von Verschleiß- bzw. Umrüstteilen bei unterschiedlichen Werkstücken erheblich. Auch entfällt der erforderliche Positionieraufwand beim Umrüsten auf andere Werkstücktypen bzw. der erforderliche Aufwand zur Montage oder Demontage einzelner Einrichtungen beim Umrüsten auf Werkstücktypen mit unterschiedlicher Zahl von Bearbeitungsabschnitten, beispielsweise auf Kurbelwellen für unterschiedliche Zylinderanzahlen.

Besonders vorteilhaft sind Ausführungsformen, bei denen die Tiefbohreinrichtung eine computernumerische Steuerungseinrichtung aufweist und die Manipulatoreinrichtung in Abhängigkeit von Steuersignalen dieser Steuereinrichtung steuerbar ist. Beispielsweise kann über einen NC-Achsantrieb die Verfahrbewegung einer Manipulatoreinrichtung innerhalb ihres Arbeitsbereiches gezielt gesteuert werden. Insbesondere kann die Steuereinrichtung, die auch die Bohrvorgänge der Tiefbohrwerkzeuge steuert, zur Ansteuerung der Manipulatoreinrichtung genutzt werden. Da diese Steuereinrichtung auf Daten zugreift, die die Werkstückgeometrie bzw. die Orte und Ausrichtungen von Bohrungen repräsentieren, ist eine zielgenaue Steuerung der Manipulatoreinrichtung in Bezug auf die Bohrungen möglich. Auf manuelle Eingriffe zur Bewegung der Manipulatoreinrichtung kann daher vollständig verzichtet werden, so dass ein vollautomatischer Betrieb einer mit einer derartigen Manipulatoreinrichtung ausgestatteten Tiefbohreinrichtung möglich ist.

Es gibt Ausführungsformen, bei denen die Manipulatoreinrichtung nur eine einzige Funktionalität bereitstellt, beispielsweise die Funktion einer Abdichteinrichtung. Bevorzugt sind Ausführungsformen, bei denen eine Manipulatoreinrichtung mehrere Funktionseinheiten zur Durchführung unterschiedlicher Manipulationen an einem der Axialposition zugeordneten Bearbeitungsabschnitt des Werkstückes aufweist. Je nach Art der Funktionalität können mehrere Funktionen gleichzeitig oder aufeinanderfolgend durchgeführt werden. Eine multifunktionale Manipulatoreinrichtung nutzt die zielgenaue Positionierbarkeit der Manipulatoreinrichtung für eine Vielzahl von Funktionalitäten, die somit mit einem Minimum erforderlicher Baugruppen realisierbar sind.

Da in der Regel auch Durchgangsbohrungen herzustellen sind, umfasst eine Manipulationseinrichtung vorzugsweise mindestens eine Abdichteinrichtung zur Abdichtung von Durchtrittsstellen von Tiefbohrwerkzeugen beim Bohren des Werkstückes. Diese Durchtrittsstellen befinden sich jeweils auf der dem Tiefbohrwerkzeug bzw. dem Spindelstock abgewandten Seite des Werkstücks. Vorzugsweise ist genau eine Abdichteinrichtung vorgesehen, die aufgrund der Verfahrbarkeit der Manipulationseinrichtung an jeder beliebigen, stufenlos einstellbaren Axialposition positionierbar ist. Es kann somit an jeder Axialposition verhindert werden, dass das Kühlmittel, vermischt mit Bohrspänen, beim Durchbruch des Bohrers auf der dem Werkzeug abgewandten Seite herausspritzt, die Vorrichtung verschmutzt und den Bohrer unter Umständen trockenlaufen lässt, was zu vorzeitigem Bohrerverschleiß führen könnte. Damit können Maschinenstillstände zu Reinigungszwecken vermieden werden und es wird ein zuverlässiger Dauerbetrieb möglich.

Eine besonders zuverlässige Abdichtung ist bei einer Weiterbildung dadurch möglich, dass eine Abdichteinrichtung, die zur Abdichtung eines axialen Bearbeitungsabschnittes, beispielsweise eines Hauptlagers oder eines Hublagers, vorgesehen ist, mindestens eine in dem Abdichtabschnitt an eine Werkstückmantelfläche über einen Umfangsabschnitt anpreßbare Abdichtschale aufweist, wodurch sich eine großflächige Abdichtung erreichen lässt, die auch hohen Bohröldrücken widersteht. Die Abdichtschale kann auf der werkstückzugewandten Seite aus Kunststoff bestehen, in den hineingebohrt werden kann. Vorzugsweise sind pro Abdichtabschnitt mehrere Abdichtschalen vorgesehen, wodurch eine in Umfangsrichtung lückenlose Abdichtung erreichbar ist, die praktisch nur den Eintrittsbereich des Werkzeuges freilässt.

Um Vibrationen und/oder eine Durchbiegung eines langgestreckten Werkstückes, beispielsweise einer Kurbelwelle, durch Bearbeitungskräfte zu vermeiden, umfasst die Manipulatoreinrichtung gemäß einer Weiterbildung Einrichtungen, die eine Abstützung und Schwingungsdämpfung des Werkstückes ermöglichen. Hierzu kann die Manipulatoreinrichtung mindestens eine Abstützeinrichtung zur bedarfsweise einstellbaren Abstützung des Werkstückes im Bereich mindestens eines Bearbeitungsabschnittes aufweisen. Die Abstützung kann direkt im Axialbereich der jeweils zu bearbeitenden Bohrung angreifen. Alternativ oder zusätzlich kann vorgesehen sein, eine Abstützung einseitig oder beidseitig neben einer Bearbeitungsstelle vorzusehen. Bevorzugt wird eine Abstützung dadurch erreicht, dass die Abstützeinrichtung mindestens ein Abstützorgan aufweist, welches numerisch gesteuert und/oder manuell zum Werkstück bewegbar und in einem Abstützbereich an die Werkstückmantelfläche anpressbar ist. Das Abstützorgan ist vorzugsweise als Abstützschale mit einer über einen Umfangsabschnitt an die Mantelfläche eines Werkstücks anlegbaren Abstützfläche ausgebildet. Dadurch kann ein sicherer Anlagekontakt geschaffen werden, der Ausweichbewegungen des Werkstückes in einem weiten Winkelbereich von Radialrichtungen auf der dem Werkzeug gegenüberliegenden Seite verhindert. Günstig sind Ausführungsformen, bei denen das Abstützorgan, z.B. auf der dem Tiefbohrwerkzeug abgewandten Seite, an das Werkzeug bis in eine Abstützstellung heranführbar und in der Abstützstellung derart festlegbar ist, dass das Abstützorgan praktisch unbeweglich gehalten ist. Damit ist eine weitgehend unnachgiebige, feste Abstützung erzielbar. Dies kann beispielsweise durch geeignete Klemmung einer Kolbenstange erreicht werden, die eine Abstützschale trägt und die mit Hilfe eines Betätigungszylinders zur Bewegung des Abstützorgans pneumatisch oder hydraulisch bewegt wird.
Eine Abstützeinrichtung kann als gesonderte Einrichtung zusätzlich zu einer Abdichteinrichtung vorgesehen sein. Bevorzugt werden die Funktionalitäten Abdichtung und Abstützung in einer einzigen Einrichtung integriert, so dass die Abdichteinrichtung als Abstützeinrichtung bzw. eine Abstützeinrichtung als Abdichteinrichtung ausgebildet ist. Durch diese Integration mehrere Funktionalitäten können Bauteile und Bauraum an der Manipulatoreinrichtung gespart werden. Bei einer Weiterbildung ist die Integration dadurch realisiert, dass mindestens eine als Abstützorgan nutzbare Abdichtschale der Abdichteinrichtung mit Hilfe eines beweglich antreibbaren Betätigungselementes in eine Abstützstellung bewegbar ist und eine Festlegungseinrichtung zur Festlegung des Betätigungselementes in der Abstützstellung vorgesehen ist. Dies kann durch eine Radial-Klemmeinrichtung realisiert werden, die eine als Betätigungselement dienende Kolbenstange klemmend festlegt, sobald die daran abgebracht Abstützschale/Abdichtschale in festem Anlagekontakt mit dem Werkstück steht.

Zur Sicherstellung der Werkstückqualität muss geprüft werden, ob die Bohrungen korrekt durchgebohrt sind. Als Ursachen für nicht durchgebohrte Bohrungen kommen beispielsweise Werkzeugbrüche, in der Länge falsch eingestellt Werkzeuge und/oder fehlerhafte NC-Programme in Betracht. Herkömmlich werden für derartige Prüfungen beispielsweise separate Prüfstationen verwendet, in denen die Werkstücke nach Ausbau aus der Tiefbohreinrichtung überprüft werden. Es sind auch Werkzeuglängenprüfeinrichtungen bekannt. Teilweise werden auch Tiefbohreinrichtungen eingesetzt, welche Einrichtungen enthalten, die die Veränderung des Druckes des dem Werkzeug zugeführten Kühlschmierstoffes beim Bohrungsaustritt überwachen oder Systeme, die die Veränderung von Axialkraft oder aufgenommener Wirkleistung beim Bohrungsaustritt überwachen. Derartige Systeme haben sich für die Produktionsanforderungen, insbesondere in der Automobilindustrie, als unzuverlässig erwiesen.

Bei bevorzugten Weiterbildungen werden die genannten Probleme dadurch gelöst, dass die Manipulatoreinrichtung mindestens eine Bohrungsprüfeinrichtung zur Prüfung eines Bohrungsdurchtritts an der dem Tiefbohrwerkzeug abgewandten Seite des Werkstückes aufweist. Die Funktionalität der Bohrungsprüfung wird damit innerhalb der Tiefbohreinrichtung bereitgestellt, und zwar auf Seiten der Werkstückhaltereinrichtung, der eine derart ausgestattete Manipulatoreinrichtung zugeordnet sein kann. Die Prüfung kann also während des Bohrprozesses oder unmittelbar danach erfolgen, solang die bearbeiteten Werkstücke noch eingespannt sind. Bei computernumerischer Steuerung kann die Prüfung lokal zielgerichtet erfolgen, da die Manipulatoreinrichtung an den Ort des vorgesehenen Bohrungsdurchtrittes verfahren werden kann. Die erforderliche Zeit für eine Werkzeuglängenkontrolle und/oder der Aufwand für eine zusätzliche Prüfstation kann eingespart werden.

Die Prüfung kann berührungslos beispielsweise auf optischem, elektrischem und/oder elektromagnetischem Wege mit Hilfe geeigneter Sensoren erfolgen. Vorzugsweise ist die Prüfeinrichtung als mechanisch arbeitende Tasteinrichtung ausgebildet, die für die harten Umgebungsbedingungen beim Bearbeitungsprozess ausreichend robust gestaltet sein kann, um Fehlfunktionen zu vermeiden. Bei vorteilhaften Weiterbildungen umfasst die Prüfeinrichtung mindestens einen zum Eindringen in eine Durchtrittsbohrung dimensionierten Eintauchstift sowie eine zugeordnete Einrichtung zur Erfassung des Eintauchens des Eintauchstiftes in eine Bohrung. Die Prüfung kann dann in der Weise erfolgen, dass der Eintauchstift an die erwartete Position einer Bohrungsdurchtrittsstelle verfahren und an das Werkstück herangebracht wird. Kann der Eintauchstift über die Mantelfläche hinaus in das Innere des Werkstückes eindringen, so ist eine Bohrung vorhanden. Stößt der Stift an der vorgesehenen Stelle auf die Mantelfläche, so liegt eine nicht-korrekte Bohrung vor, bei der beispielsweise der Bohrkanal überhaupt nicht oder nur über einen zu geringen Querschnitt bis zur Werkstückmantelfläche reicht.

Vorzugsweise ist die Prüfeinrichtung derart konfiguriert, dass bei der Prüfung in Abhängigkeit vom Prüfergebnis ein vorzugsweise elektrisches Prüfsignal an eine Steuerung der Tiefbohreinrichtung abgebbar ist, wobei die Steuereinrichtung vorzugsweise so konfiguriert ist, dass ein Bohrprozess in Abhängigkeit von dem Prüfsignal steuerbar ist. Dadurch ist es beispielsweise möglich, unmittelbar nach Feststellung einer nicht-korrekten Bohrung den Bohrprozess zu unterbrechen, um die Ursache des Fehlers festzustellen und zu beseitigen.

Die beschriebenen Funktionalitäten können einzeln oder in beliebigen Kombinationen an einer Manipulatoreinrichtung vorgesehen sein. Manipulatoreinrichtungen der hier beispielhaft beschriebenen Art können bei allen gattungsgemäßen Tiefbohreinrichtungen unabhängig davon eingesetzt werden, ob die zu bearbeitenden Werkstücke mit horizontaler Werkstücklängsachse oder mit einer schräg zur Horizontalen gekippten Werkstücklängsachse gehalten werden.

Weitere Merkmale und Einzelheiten der Erfindung ergeben sich aus der nachfolgenden Beschreibung einer bevorzugten Ausführungsform in Verbindung mit den Zeichnungen und den Unteransprüchen. Hierbei können die einzelnen Merkmale jeweils für sich allein oder zu mehreren in Kombination miteinander bei einer Ausführungsform verwirklicht sein. Ein Ausführungsbeispiel der Erfindung wird in den Zeichnungen dargestellt und im folgenden näher erläutert. In den Zeichnungen zeigen:
- Fig. 1: eine schematische Seitenansicht einer Ausführungsform einer erfindungsgemäßen Tiefbohreinrichtung,
- Fig. 2: eine Draufsicht auf die Tiefbohreinrichtung von Fig. 1,
- Fig. 3: eine Vorderansicht der Tiefbohreinrichtung gemäß Fign. 1 und 3,
- Fig. 4: eine schrägperspektivische Ansicht einer bevorzugten Ausführungsform einer ersten Teileinrichtung mit einer Ausführungsform einer Manipulatoreinrichtung,
- Fig. 5: eine schrägperspektivische Ansicht einer Ausführungsform einer Manipulatoreinrichtung,
- Fig. 6: eine schematische Darstellung der Arbeitsweise einer an der Manipulatoreinrichtung vorgesehenen Abstützeinrichtung,
- Fig. 7: eine schematische Darstellung der Arbeitsweise einer an der Manipulatoreinrichtung vorgesehenen Bohrungsprüfeinrichtung in Wartestellung und
- Fig. 8: die in Fig. 7 gezeigte Bohrungsprüfeinrichtung in Prüfstellung, wobei in (a) eine Situation mit vorhandener Bohrung und in (b) eine Situation mit fehlender Bohrung gezeigt ist.

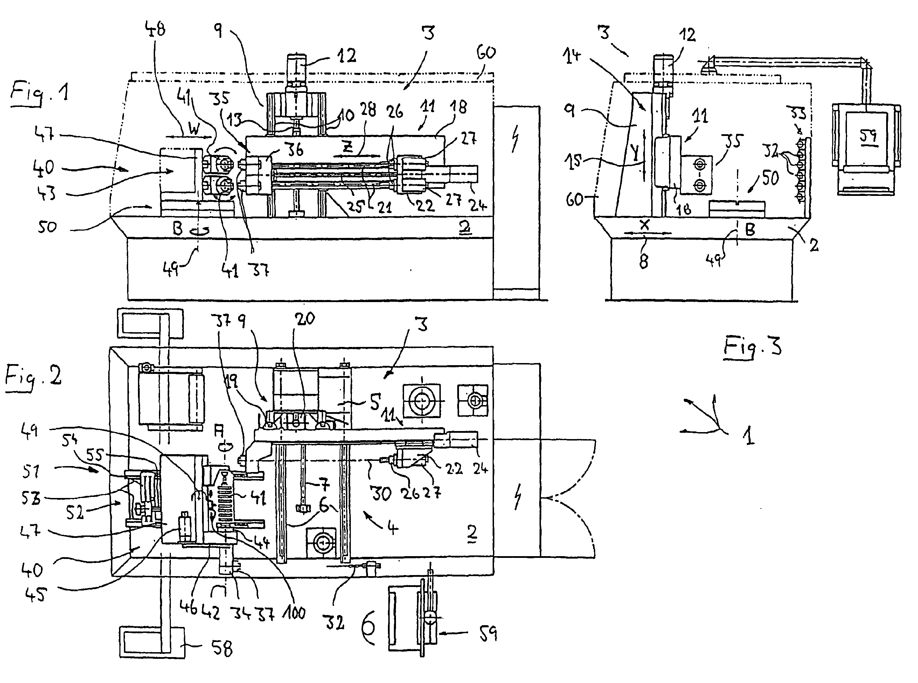

Die in den Fign. 1 bis 3 gezeigte Ausführungsform einer erfindungsgemäßen Tiefbohreinrichtung 1 basiert auf einem Standard-Tiefbohrzentrum, bei dem auf der Oberseite eines Maschinenbettes 2 eine Tiefbohreinheit 3 befestigt ist. Diese hat eine erste Positioniereinrichtung 4 mit einem Querschlitten 5, der auf zwei achsparallelen Linearführungsschienen 6 gleitbeweglich geführt ist und mittels eines (nicht gezeigten) ersten NC-Antriebsmotors über einen ersten Spindeltrieb 7 parallel zu einer horizontalen ersten Achse 8 (X-Achse) verfahrbar ist.

Auf dem Querschlitten erhebt sich ein Ständer 9 mit einem Paar vertikal ausgerichteter, achsparalleler Linearführungsschienen 10, an denen eine Werkzeugträgereinrichtung 11 vertikal beweglich geführt ist. Zum Heben und Senken der Werkzeugträgereinrichtung 11 dient ein an der Oberseite des Ständers angeordneter NC-Motor, z.B. ein Servomotor 12, dessen Motorachse parallel zu den Achsen der Linearführungen 10 verläuft und der über einen zwischen den Führungsschienen 10 angeordneten, vertikalen zweiten Spindeltrieb 13 an der Rückseite der Werkzeugträgereinrichtung 11 angreift. Dadurch ist eine einfach aufgebaute zweite Positioniereinrichtung 14 zur Vertikalverschiebung der Werkzeugträgereinrichtung 11 parallel zu einer vertikalen zweiten Achse 15 geschaffen, die als Y-Achse bezeichnet wird.

Die Werkzeugträgereinrichtung 11 umfasst einen horizontal langgestreckten, in Form einer vertikalen Platte ausgebildeten Träger 18, an dessen ständerzugewandter Rückseite Führungselemente 19 zum Angreifen an den Linearführungen 10 sowie eine Spindelmutter 20 zum Zusammenwirken mit der vertikalen zweiten Spindel 13 befestigt sind. Auf der gegenüberliegenden Vorderseite verläuft in horizontaler Richtung eine Linearführung mit zwei achsparallelen Führungsschienen 21, auf denen ein Spindelstock 22 linear beweglich geführt ist. Zum Verschieben des Spindelstockes entlang der Linearführung 21 parallel zur horizontalen Z-Achse 28 ist ein weiterer NC-Servomotor 24 vorgesehen, der über eine horizontale Gewindespindel 25 an einer Gewindetriebsmutter an der Unterseite des Spindelstockes angreift.

Im Spindelstock 22 sind mit Abstand übereinanderliegend zwei achsparallele Arbeitsspindeln 26 angeordnet, wobei für jede der Arbeitsspindeln am Spindelstock ein gesondert ansteuerbarer, elektromotorischer Spindelantrieb 27 zur Drehung der Arbeitsspindel um eine horizontale Spindelachse 30 vorgesehen ist. Jede der Arbeitsspindeln hat auf der antriebsabgewandten Seite ein Schnellspannfutter zur Aufnahme eines Tiefbohrwerkzeuges 32. Es gibt auch Ausführungen mit nur einer Spindel oder mit mehr als zwei Spindeln.

In der gezeigten Betriebsstellung der Tiefbohreinrichtung sind keine Tiefbohrwerkzeuge eingespannt. Einige Tiefbohrwerkzeuge sind achsparallel übereinanderliegend in einem später erläuterten Wechselmagazin 33 angeordnet, das seitlich neben der Werkzeugträgereinrichtung an einer vertikalen Trägerplatte am Rand des Maschinenbettes angeordnet ist.

Zur Führung der in die jeweiligen Arbeitsspindeln eingespannten Tiefbohrwerkzeuge vor, während und nach einem Bohrvorgang ist eine Werkzeugführungseinrichtung 35 vorgesehen, die an dem dem Vorschubantrieb 24 gegenüberliegenden Ende fest an der Trägerplatte 18 angebracht ist und einen Bohrbuchsenträger 36 zur Aufnahme von auswechselbaren Bohrbuchsen bzw. Werkzeugführungen 37 hat.

Die beschriebene bevorzugte Tiefbohreinheit ermöglicht es, durch rechtwinklig zueinander verlaufende Bewegungen der Werkzeuge parallel zur X-Achse bzw. zur Y-Achse die Werkzeuge zur Einnahme einer Bearbeitungsposition senkrecht zur Werkzeuglängsachse parallel zu verschieben. Weiterhin ist durch die Verschiebung des Spindelstockes in Richtung auf die Werkzeugführungseinrichtung 35 oder von dieser weg eine Axialverschiebung des Werkzeuges in Z-Achsen-Richtung möglich. Dieser Arbeitsvorschub des Tiefbohrwerkzeuges ist möglich, ohne dass größere Massen der Tiefbohreinheit, beispielsweise die Werkzeugträgereinrichtung als Ganzes, verschoben werden müsste. Der Bearbeitungsvorschub erfolgt durch Linearverschiebung des Spindelstockes, also durch eine dem Werkzeug zugeordnete Z-Achse 28.

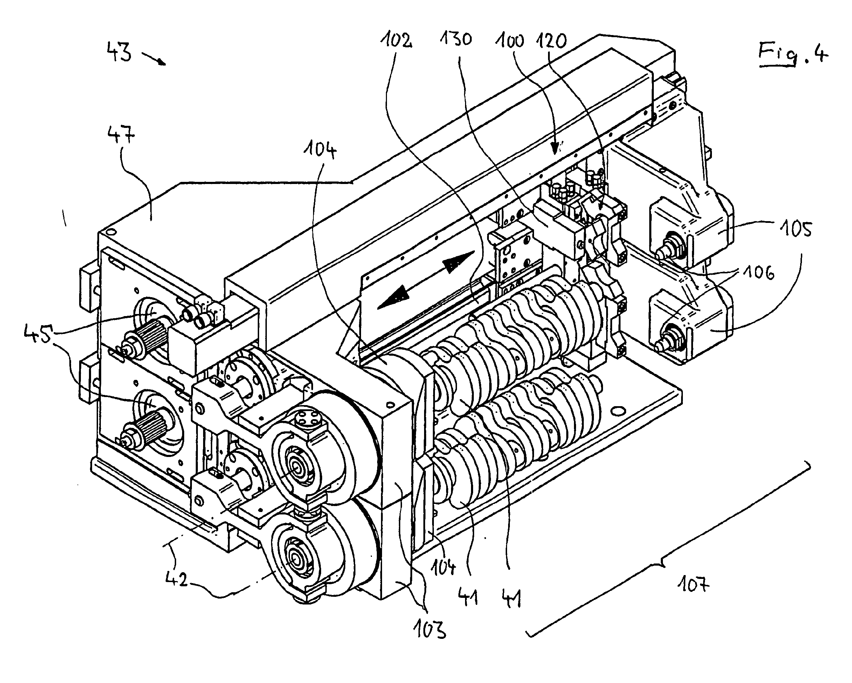

Zum Halten der zu bohrenden Werkstücke sowie zur richtigen Ausrichtung der Werkstücke in Bezug auf die Werkzeug- bzw. Spindelachse ist eine Werkstückhalteeinheit 40 vorgesehen, die im gezeigten Beispiel zwei Kurbelwellen 41 trägt, deren Längsachsen 42 parallel zueinander horizontal ausgerichtet sind. Die Werkstückhalteeinheit hat im wesentlichen zwei funktionell zusammenwirkende Teileinrichtungen. Eine erste Teileinrichtung 43 dient zum Halten der Werkstücke mit horizontal ausgerichteter Werkstücklängsachse und zum Drehen der Werkstücke um die auch als A-Achse bezeichnete Werkstücklängsachse. Im gezeigten Beispiel sind hierzu die Kurbelwellen 41 in Spannfuttern 44 aufgenommen, die von einem Schwenkantrieb 45 mit z.B. über einen Zahnriemen 46 oder eine Kette oder ein Stirnrad drehbar sind. Für jede Kurbelwelle ist ein gesonderter, unabhängig vom anderen Motor steuerbarer Antrieb vorgesehen. Auf der Gegenseite können die Werkstücke auf Spitzen oder in Spannfuttern gelagert sein. Die beschriebenen Elemente sind an einem im Querschnitt L-förmigen Träger 47 an dessen vertikalem Schenkel befestigt. Der Träger ist auf einem in Fig. 3 gut zu erkennenden Drehtisch 50 befestigt, der Teil einer zweiten Teileinrichtung der Werkstückhalteeinheit ist und um eine vertikale Drehachse 49, im folgenden auch B-Achse, drehbar ist. Durch die Nutzung eines ggf. ohnehin vorhandenen Drehtisches einer Tiefbohreinrichtung können herkömmliche Tiefbohreinrichtungen auf zweckmäßige und kostengünstige Weise zu einer erfindungsgemäßen Tiefbohreinrichtung aufgewertet werden, indem eine geeignete erste Teileinrichtung am Drehtisch befestigt wird.

Der Drehtisch ist mittels einer dritten Positioniereinrichtung 51 parallel zu einer dritten Achse bzw. W-Achse 48 verschiebbar, die parallel zur Spindelachse 30 ausgerichtet ist. Hierzu ist der Drehtisch auf einer dritten Linearführungseinrichtung 52 angeordnet, die zwei auf dem Maschinenbett befestigte, achsparallel zueinander horizontal angeordnete Führungsschienen 53 umfasst, auf denen das Drehtellerunterteil geradlinig verschiebbar geführt ist. Zur Verschiebung der Kurbelwellenspannvorrichtung in W-Richtung ist ein Antriebsmotor 54 vorgesehen, der eine Gewindespindel 55 dreht, auf der eine an der Unterseite des Drehtisches befestigte Mutter läuft.

Es können durch eine Überlagerung von Drehungen um die A-Achse 42 und die B-Achse 49 beliebige Raumwinkel eingefahren werden. Dabei werden durch Drehung um die vertikale B-Achse unterschiedliche Kippwinkel der Bohrungen relativ zu den Werkstückachsen eingestellt, während durch Drehung um die A-Achse unterschiedliche Positionen bzgl. des Umfanges eines Werkstückes einstellbar sind. Bei allen Winkeleinstellungen bleiben die Längsachsen 42 der Werkstücke horizontal.

Durch Parallelverschiebung der Werkzeuge in X-Richtung sind verschiedene Positionen entlang der Längsachse des Werkstückes einstellbar, während Parallelverschiebungen in vertikaler Y-Richtung dazu genutzt werden können, abweichend von einer Radialrichtung zur Längsachse eine seitlich zur Längsachse versetzte Bohrung einzubringen. So können durch rechtwinklige Bewegungen im Werkzeug die erforderlichen Bearbeitungspositionen angefahren werden.

Über Bewegung der Werkstückhalteeinheit 40 mittels Motor 54 parallel zur W-Achse kann das Werkstück gegen die in W-Richtung bzw. Z-Richtung festgelegte Bohrbuchse 37 gefahren werden. Durch Bewegungen in W-Richtung können auch Kompensationsbewegungen durchgeführt werden, die durch das Schwenken der Werkstücke um die vertikale B-Achse erforderlich werden, wenn die Werkzeuge horizontal gegen die vertikale B-Achse versetzt sind.

Der Bearbeitungsvorschub zur Vertiefung einer Bohrung bzw. zum Herausziehen eines Werkzeuges aus der Bohrung erfolgt zweckmäßig durch die dem Werkzeug zugeordnete Z-Achse, indem der Spindelstock relativ zur Werkzeugführungseinrichtung verfahren wird, wobei zweckmäßig die Bohrbuchse fest an der dem Werkzeug zugewandten Seite des Werkstückes anliegt.

Ein Verfahren zum Bohren von Bohrungen, die an unterschiedlichen Positionen und/oder in unterschiedlichen Ausrichtungen relativ zur Längsachse der Werkstücke eingebracht werden sollen, kann wie folgt durchgeführt werden. Die Tiefbohreinheit ist soweit eingerichtet, dass Tiefbohrwerkzeuge in die Arbeitsspindeln eingespannt und den Tiefbohrwerkzeugen und der Werkstückgeometrie angepasste Bohrbuchsen in die Werkzeugführungseinrichtung 37 eingebaut sind. Zum Einspannen der Kurbelwellen in die Werkstückhalteeinheit kann der Drehtisch mittels Vorschub in W-Richtung auf Höhe eines seitlich neben dem Maschinengestell angeordneten Ladeportals 58 verfahren werden. Der Drehtisch kann in eine Ladeposition verdreht werden, bei der die Einspannelemente für die Werkstücke dem Ladeportal zugewandt sind, also in eine ca. 90° gegen die gezeigte Ausrichtung verdrehte Beladeposition. Nach Einspannen der Kurbelwellen werden diese durch den B-Achsen-Antrieb und die Schwenkantriebe 45 in eine erste Arbeitsposition gedreht, die der Ausrichtung der ersten zu erzeugenden Bohrungen entspricht. Durch Verschiebung des Werkzeugträgers in X-Richtung und/oder Y-Richtung wird die richtige Position der Werkzeuge angefahren. Anschließend werden durch Verfahren des Drehtisches in Richtung der W-Achse die Werkstückkonturen an die feststehenden Bohrbuchsen angedrückt. Bei eingeschaltetem Spindelantrieb wird dann über den Vorschubantrieb 24 der Spindelstock vorgeschoben und damit das von ihm getragene Werkzeug durch die Führungsbuchse hindurch in das Werkstück bis zur vorgesehenen Tiefe eingebracht. Anschließend wird das Werkzeug zurückgezogen. Anschließend kann der Drehtisch zurückgezogen werden, um durch Drehungen um die B-Achse und/oder A-Achse eine neue Werkstückausrichtung relativ zum Werkzeug zu erreichen. Zeitgleich oder zeitversetzt zu dieser Schwenkung kann durch Bewegungen der Werkzeuge in X- und/oder Y-Richtung die neue Werkzeugposition angefahren werden. Dann wird der beschriebene Vorgang für die neuen Bohrungen eingeleitet.

Um einen sicheren Anlagekontakt zwischen Bohrbuchse und Werkstück zu ermöglichen, sind zweckmäßig den jeweiligen Kurbelwellenkonturen angepasste Bohrbuchsen vorgesehen. Sollen Bohrungen unterschiedlichen Durchmessers gebohrt werden, so sind zweckmäßig entsprechend unterschiedlich dimensionierte Tiefbohrwerkzeuge und den jeweiligen Werkzeugdurchmessern angepasste Bohrbuchsen vorgesehen. Ein Werkzeugwechsel und ggf. ein durchzuführender Bohrbuchsenwechsel sind bei der gezeigten Ausführungsform zeitgleich automatisch durchführbar. Hierzu sind der automatische Bohrbuchsenwechsler 33 neben der Tiefbohreinheit 1 sowie eine Bohrbuchsen-Wechseleinrichtung 34 an der Werkstückhalteeinheit 40 vorgesehen. Während die Werkzeugwechseleinrichtung 33 gestellfest angebracht ist, ist die Werkzeugführungs-Wechseleinrichtung 34 fest mit dem Träger 47 der Werkstückhalteeinheit verbunden und mit diesem in W-Richtung verfahrbar. Zum gleichzeitigen Wechsel von Tiefbohrwerkzeugen und dazu passenden Bohrbuchsen wird der Drehtisch so weit zurückgezogen, dass eine Querverschiebung des Ständers 9 ohne Berührung mit der Werkstückhalteeinheit oder den darin gehaltenen Werkstücken möglich ist. Der Spindelstock wird in die in den Figuren gezeigte maximale Rückzugstellung linear verschoben. Anschließend wird der Ständer so weit seitlich verfahren, bis die Spindelachse koaxial mit der Achse eines in der Haltevorrichtung 33 gehaltenen, einzuwechselnden Werkzeuges 32 ist. In dieser Stellung sind die zu wechselnden Bohrbuchsen ebenfalls zueinander ausgerichtet und ein Bohrbuchsenwechsel kann durch entsprechende Manipulationen vorgenommen werden, wobei der Drehtisch in W-Richtung verfahren werden kann. Der Werkzeugwechsel kann ggf. gleichzeitig unter Verschiebung des Spindelstockes und entsprechende Manipulationen in der Arbeitsspindel vorgenommen werden. Nach dem Werkzeug- und Bohrbuchsenwechsel, die selbstverständlich auch jeweils gesondert durchführbar sind, kann der beschriebene Arbeitsvorgang zum Einbringen neuer Bohrungen durchgeführt werden.

Die sehr übersichtlich, einfach und kompakt aufgebaute Tiefbohreinrichtung, die zum Beispiel mit der Tiefbohreinheit 4 und dem Drehtisch 50 wesentliche Komponenten moderner Tiefbohrzentren nutzen kann, erhöht eine flexible Bohrung von Werkstücken, insbesondere Kurbelwellen mit hoher Produktivität und hoher Präzision. Sämtliche Antriebe zur Bewegung der gegeneinander verschiebbaren und verdrehbaren Elemente werden zweckmäßig über eine numerische Steuerung computergestützt gesteuert. Diese Steuereinrichtung ist bei der gezeigten Anlage in einem neben der Anlage stehenden Bedienpult 59 untergebracht. Durch die NC-Steuerung sind die Vorgänge beim Bohren und zwischen den Bohrvorgängen vollständig automatisierbar. Die NC-Steuerung kann auch so eingerichtet sein, dass die Manipulationen zum Ein- und Auswechseln von Werkstücken weitgehend automatisierbar sind. Entsprechend ist es möglich, mit der beschriebenen oder einer entsprechenden maschinellen "Hardware" durch geeignete Steuerprogramme die unterschiedlichsten Bohrungsgeometrien und -verteilungen an Werkstücken, insbesondere Kurbelwellen, zu schaffen. Der kompakte Aufbau ermöglicht es, alle beweglichen Komponenten der Einrichtung innerhalb einer kompakt dimensionierten Schutzhaube 60 unterzubringen, die für Arbeiten an der Tiefbohreinrichtung zum Beispiel auf der dem Ladeportal 58 zugewandten Seite mit Türen o.dgl. verschließbare Öffnungen haben kann.

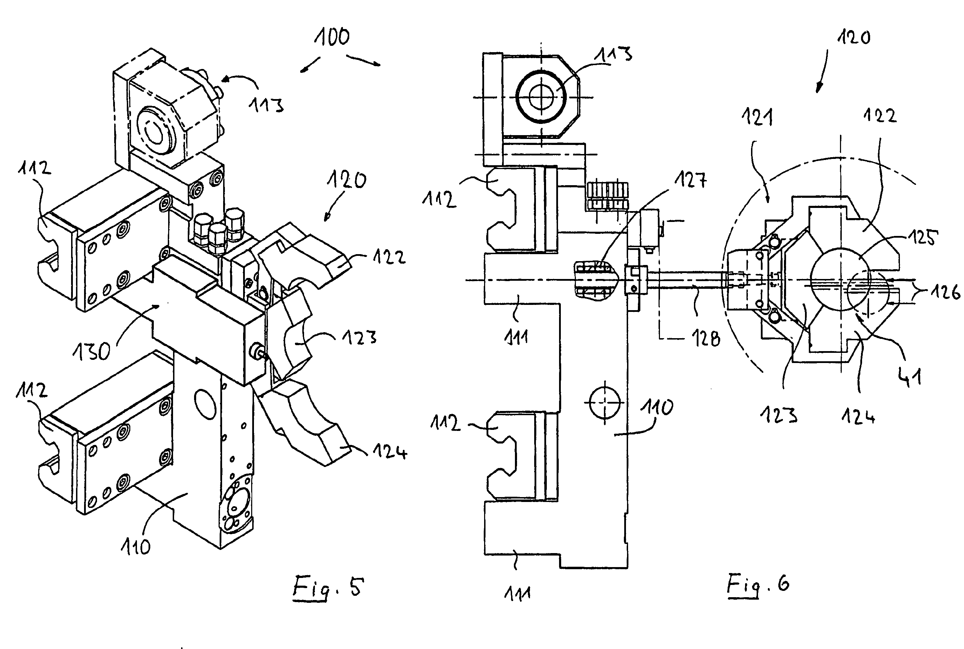

Erfindungsgemäße Tiefbohreinrichtungen zeichnen sich besonders durch das Vorhandensein von mindestens einer, vorzugsweise genau einer, Manipulatoreinrichtung 100 aus, mit deren Hilfe eine Vielzahl von Manipulationen an den eingespannten Werkstücken vor, während und/oder nach einem Bohrprozess durchgeführt werden können. Zur Verdeutlichung zeigt Fig. 4 schrägperspektivisch eine Ausführungsform einer ersten Teileinrichtung 43 der Werkstückhaltereinheit, an der eine derartige Manipulatoreinrichtung 100 angebracht ist. Aus Gründen der Übersichtlichkeit haben funktional entsprechende Elemente der Figuren 1 bis 3 und 4 die gleichen Bezugszeichen. Die Manipulatoreinrichtung ist im Detail in Fig. 5 gezeigt, einige Funktionalitäten werden auch anhand der Fig. 6 bis 8 beschrieben. Der Träger 47 hat an seiner den Werkstücken 41 zugewandten Vorderseite vier parallele, übereinanderliegende, horizontale Profilschienen 102 mit einem hintergreifbaren Trägerprofil. Jedem der übereinanderliegenden Werkstücke ist ein Paar übereinanderliegender Profilschienen zugeordnet, deren Längsachsen parallel zur Werkstücklängsachse 42 verläuft. Die Profilschienen erstrecken sich im wesentlichen über die gesamte Breite der zweiten Teileinrichtung. An dem dem Betrachter zugewandten Ende der zweiten Teileinrichtung sind übereinander zwei identische, L-förmige Lagerteile 103 befestigt, die an ihren Innenseiten Spannfutter 104 für die Werkstücke tragen. Am gegenüberliegenden Ende sind Gegentagerteile in Form von Reitstöcken 105 mit Lagerspitzen 106 zur Festlegung der Drehachse der Kurbelwellen vorgesehen. Die Reitstöcke 105 sind auf den Profilschienen 102 verschiebbar und in stufenlos einstellbaren Axialpositionen festlegbar, um die Einspannbreite an die Werkstückdimensionen anzupassen.

Für jedes einzuspannende Werkstück ist ein gesonderter, unabhängig ansteuerbarer Drehantrieb für die Werkstückdrehung um die A-Achse vorgesehen. Dieser umfasst im gezeigten Beispiel jeweils einen im Träger 47 befestigten Servomotor 45, der über einen nicht gezeigten Zahnriemen am drehbar gelagerten Spannfutter 104 angreift. Die Servomotoren sind für Werkstückdrehungen von bis zu ca. 1700 U/min. ausgelegt, wodurch gegebenenfalls eine Reinigung der Werkstücke durch Abschleudern von Ölen und Spänen möglich ist. Die unabhängigen Antriebe erlauben einen modularen Aufbau der Teileinrichtung, die einfach für unterschiedliche Werkstückzahlen umgerüstet werden kann. Außerdem ist die Einstellung der richtigen Drehstellung (Radialposition) der Werkstücke für jedes Werkstück individuell möglich, was insbesondere bei der Einstellung mit Hilfe von Messtastern vorteilhaft ist.

Zwischen den Endlagerteilen 103 und 105 ist für jedes Werkstück an einem Paar zugeordneter Profilschienen 102 eine Manipulatoreinrichtung 100 angebracht. Diese wird bei abgenommenem Reitstock 105 auf das jeweilige Schienenpaar aufgeschoben, bevor der Reitstock aufgeschoben und festgelegt wird. Jede Manipulatoreinrichtung 100 ist zwischen den Endlagerteilen 103 und 105 der Einspannvorrichtung stufenlos innerhalb eines Arbeitsbereiches 107 verfahrbar, welcher die gesamte Länge der eingespannten Werkstücke und damit jeden Bearbeitungsabschnitt eines Werkstückes umfasst. Als Bearbeitungsabschnitt wird hier jeder axiale Abschnitt des Werkstückes, insbesondere ein Hublager oder ein Hauptlager einer Kurbelwelle, angesehen, insbesondere jene Abschnitte, in denen Bohrungen mit Hilfe der Tiefbohrwerkzeuge eingebracht wurden, werden oder werden sollen. Ein nicht gezeigter NC-Achsantrieb, welcher über die Steuereinrichtung der Tiefbohreinrichtung angesteuert wird, erlaubt eine gezielte Bewegung einer Manipulatoreinrichtung an jede vorgebbare Axialposition entlang eines eingespannten Werkstücks 41 und ermöglicht somit die Positionierung der Manipulatoreinrichtung aufgrund von Daten, die auch zur Bohrung des Werkstückes genutzt werden.

Wie in Fig. 5 und 6 gut erkennbar, hat eine auswechselbare Manipulatoreinrichtung 100 einen im Einbauzustand vertikal ausgerichteten Grundkörper 110, an dessen werkstückabgewandten Seite übereinanderliegend zwei horizontale Trägerabschnitte 111 ausgebildet sind, die der Befestigung von Schlittenelementen 112 mit einem dem Profil der Profilleisten 102 angepassten Innenprofil dienen. Am oberen Ende des Grundkörpers 110 ist eine Spindelmutter113 befestigt, welche im Einbauzustand der Manipulatoreinrichtung auf einer NC-gesteuert drehbaren Gewindespindel läuft. Am Grundkörper 110 sind bei der gezeigten Ausführungsform mehrere Funktionseinheiten befestigt, nämlich eine integrierte Abstütz- und Abdichteinrichtung 120 und eine Bohrungsprüf einrichtung 130.

Die als Abdichteinrichtung nutzbare Einrichtung 120 hat drei an einem gemeinsamen Kniehebelmechanismus 121 angebrachte Abdichtschalen 122, 123, 124, die an ihren zylindrisch gekrümmten, werkstückzugewandten Innenflächen (nicht gezeigte) Kunststoffbeläge aufweisen. Der Kniehebelmechanismus ist so ausgelegt, dass bei einem hydraulischen Vorschub der mittleren Schale 123 in Richtung des abzudichtenden Werkstückabschnittes (z.B. Hauptlager 125 einer Kurbelwelle 41) sich die symmetrisch zur Mittelschale angeordneten, äußeren Schalen 122 und 124 zur Bildung eines fast lückenlosen Dichtrings um den abzudichtenden Werkstückabschnitt legen, so dass nur noch auf der der Mittelschale 123 gegenüberliegenden Seite ein Spalt zur Durchführung des Bohrwerkzeuges bleibt. Durch diese Rundum-Abdichtung wird ein Austritt von unter Druck stehender Bohrflüssigkeit beim Durchbruch des Bohrwerkzeuges zuverlässig verhindert. Dieses dringt lediglich ein Stück in den weichen Belag der mittleren Abdichtschale 123 ein. Ein Austreten von Bohrflüssigkeit und damit eine Verschmutzung des Bohrbereiches sowie gegebenenfalls ein Trockenlaufen der Bohrwerkzeuge wird auf diese Weise zuverlässig verhindert.

Die Elemente der Abdichteinrichtung 120 können auch zur zuverlässigen Abstützung des Werkstückes im umfassten Bereich dienen, um beispielsweise Vibrationen oder einen Durchbiegung der Kurbelwelle durch Bearbeitungskräfte (Pfeile 126) zu vermeiden. Hierzu ist im Grundkörper 110 eine elektrisch oder hydraulisch betätigbare Klemmhülse 127 vorgesehen, die als Abstützung der Kurbelwelle beim Bohren dient. Die beschriebenen Schalen der Abdichteinrichtung sind am vorderen Ende einer Kolbenstange 128 befestigt, die mit Hilfe eines im Grundkörper 110 angeordneten Betätigungszylinders hydraulisch aus der in Fig. 5 gezeigten Offenstellung der Schalen in die in Fig. 6 gezeigte Umgreifungsstellung der Schalen verfahren werden kann. In der Umgreifungsstellung liegt insbesondere auch die mittlere Schale 123 über einen Umfangswinkel von ca. 110° mit festem, flächigen Berührungskontakt an der Werkstückmantelfläche an. In dieser Abstützstellung wird nun die Kolbenstange 128 festgelegt, indem die Klemmhülse 127 zur Klemmung der Kolbenstange 128 betätigt wird. Damit wird eine Ausweichbewegung insbesondere der als Abstützorgan dienenden mittleren Schale 123 unter der Wirkung der Bearbeitungskräfte 126 zuverlässig vermieden, so dass die auftretenden horizontalen Bearbeitungskräfte in ihrer Wirkrichtung von der Abdicht-/Abstützeinrichtung 120 direkt an der zu bohrenden Lagerstelle abgefangen werden. Die Klemmung vermeidet auch Ausweichbewegungen quer zur Wirkrichtung 126 der Bearbeitungskräfte, was insbesondere durch die über einen Umgreifungsabschnitt von ca. 110° angreifenden Abstützschale 123 und auch durch die anderen Abstützschalen 122 und 124 geleistet wird, welche bei anderen Ausführungen von Abstützungseinrichtungen auch entfallen können.

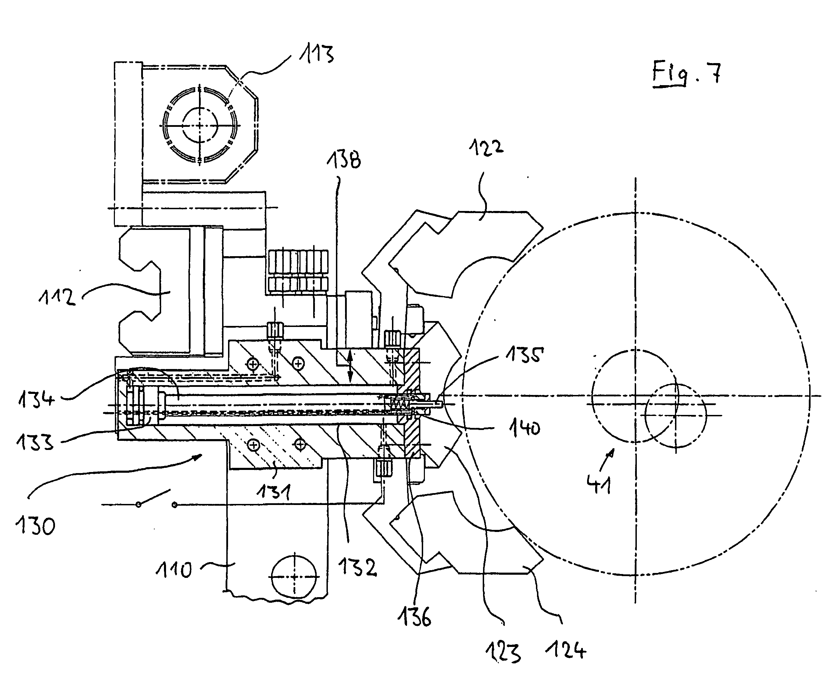

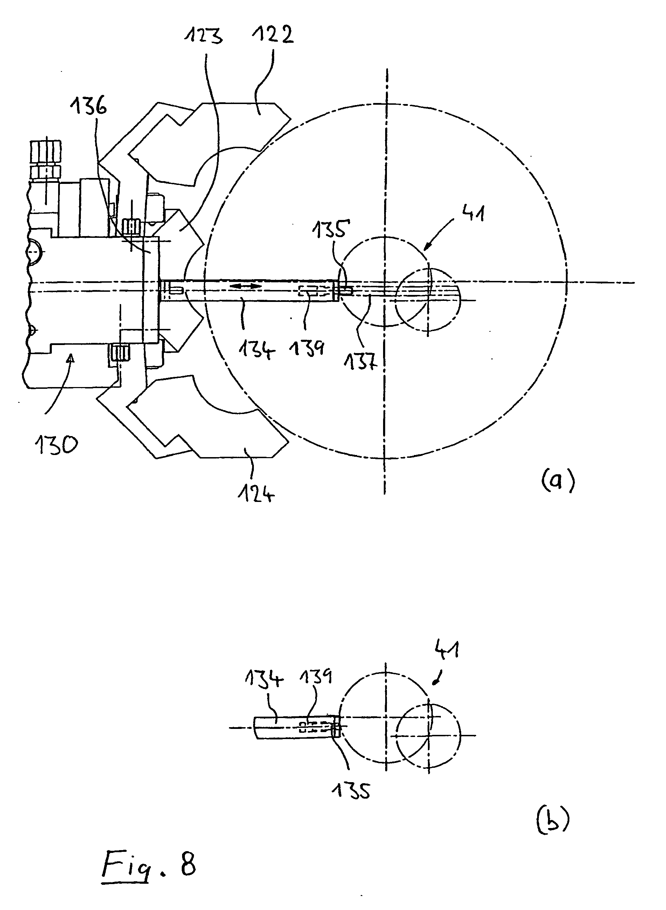

Anhand der Fig. 7 und 8 werden Aufbau und Arbeitsweise einer bevorzugten Ausführungsform einer Bohrungsprüfeinrichtung 130 beschrieben, welche am Grundkörper 110 neben der kombinierten Abdicht/Abstützeinrichtung 120 befestigt ist. Die Bohrungsprüfeinrichtung 130 hat ein Gehäuse 131, in dem eine zur Werkstückseite offene Zylinderbohrung 132 vorgesehen ist. In dieser läuft ein beidseitig mit Hydraulikfluid beaufschlagbarer Kolben 133, an dem eine Stange 134 befestigt ist. Die Stange 134 ist in einer Durchlassöffnung einer an der Vorderseite des Gehäuses befestigten Stirnplatte 136 axial beweglich geführt. Die Stange 134 trägt an ihrem werkstückzugewandten Ende in einer stirnseitig offenen Bohrung 139 einen axial federnd gelagerten Prüfstift 135. Der Prüfstift 135 ist als Eintauchstift gestaltet und im Durchmesser so dimensioniert, dass er in eine voll durchgebohrte Bohrung auf der Durchtrittsseite eintauchen kann. Eine nicht gezeigte Sensoreinrichtung ist zur Erfassung der axialen Position des Eintauchstiftes 135 ausgelegt, um zu unterscheiden, ob sich der Prüfstift 135 in der gezeigten ausgerückten Stellung oder in einer eingedrückten Stellung befindet, in die er gegen die Kraft der Feder 140 in die Haltebohrung 139 eingedrückt werden kann. Die Position des Prüfstiftes kann beispielsweise direkt über einen Mikroschalter oder indirekt über eine pneumatische Schaltung erfasst und ein der Position entsprechendes Prüfsignal erzeugt werden.

Die Arbeitsweise der Bohrungsprüfeinrichtung wird anhand der Fig. 8 (a) und (b) näher erläutert. Nach Abschluss eines Bohrvorganges an einem ausgewählten Bearbeitungsabschnitt wird das Bearbeitungswerkzeug zurückgezogen. Vorher oder nachher wird die Bohrungsprüfeinrichtung durch computernumerisch gesteuerte Axialverschiebung der Manipulatoreinrichtung 100 so verfahren, dass der Prüfstift 135 in seiner Position mit der Position des (erwarteten) Bohrungsaustritts der Bohrung 137 übereinstimmt. Die Positionierung in vertikaler Richtung 138 kann manuell oder automatisch z.B. durch eine NC-Steuerung erfolgen. In dieser sind diejenigen Daten, die Position und Ausrichtung der entsprechenden Bohrung repräsentieren, ohnehin vorhanden und können somit für die Positionierung der Bohrungsprüfeinrichtung genutzt werden. Nach korrekter Positionierung wird der Kolben 133 hydraulisch in Richtung Werkstück verfahren, so dass die Stange 134 mit dem Prüfstift 135 sich in Richtung des Werkstückes bewegt. Da die Vorschubachse des Prüfstiftes mit der Bohrungsachse übereinstimmt und der Stiftdurchmesser etwa 10 bis 20% kleiner ist als der nominelle Bohrungsdurchmesser, kann der Prüfstift, wie in Fig. 8 (a) gezeigt, in die Bohrung 137 eintauchen, bis die Stange 134 ihre Endstellung mit Anlagekontakt an der Werkstückmantelfläche erreicht hat. Entsprechend der ausgerückten Stellung des Prüfstiftes wird ein Prüfsignal für eine korrekte Bohrung oder kein Prüfsignal erzeugt. Danach wird der Prüfstift in die in Fig. 7 gezeigte Ruhestellung zurückgezogen.

Eine Situation mit nicht korrekter Bohrung ist in Fig. 8 (b) gezeigt. Da die Bohrung nicht bis zu der der Prüfeinrichtung 130 zugewandten Seite durchgedrungen ist, ist im Erwartungsbereich des Bohrungsdurchtrittes noch Material vorhanden. Daher stößt die Spitze des Prüfstiftes 135 beim Vorfahren der Prüfstange auf die Werkstückmantelfläche und taucht in der Endphase der Vorschubbewegung unter Zusammenpressen der Feder 140 in ihre Halteöffnung 139 ein. Durch das Eintauchen in die Halteöffnung wird ein Prüfsignal ausgelöst, das eine nicht korrekte Bohrung anzeigt. Bei der gezeigten Ausführungsform empfängt die Steuereinrichtung der Tiefbohreinheit dieses Prüfsignal oder ein daraus abgeleitetes Signal und unterbricht den Bearbeitungsprozess des Werkstückes, damit ein Bediener die Ursache für den Fehler finden und beseitigen kann.

Bei anderen Ausführungsformen ist auch eine Prüfung von Bohrungen möglich, die bei der Prüfung schräg zur Richtung der Spindelachse ausgerichtet sind. Ein hierfür benötigter schräger Vorschub eines Prüfungsstiftes kann dadurch ermöglicht werden, dass die Bohrungsprüfeinrichtung um eine vertikale Achse verschwenkbar gelagert ist, um Schrägstellungen der Prüfstange zu erreichen. Es ist auch möglich, den Vorschub/Rückzug eines Prüfstiftes mittels einer NC-gesteuerten Überlagerung einer Querbewegung der Manipulatoreinrichtung entlang der Profilschienen 102 und einer Vorschubbewegung der Stange 134 zu erreichen. Hierzu können besondere Formen von Prüfstiften, z.B. mit Abschrägungen, nützlich sein. Die Zustellung/Rückziehung der Stange 134. kann bei allen Anspruchsformen z.B. hydraulisch, pneumatisch oder elektromechanisch erfolgen.

Die erläuterten Funktionen der an der Manipulatoreinrichtung 100 vorgesehenen Funktionseinheiten 120, 130 können an jeder beliebigen, stufenlos einstellbaren Axialposition der entsprechenden Kurbelwelle durchgeführt werden. Dabei wird die Abdichtfunktion während des Bohrvorganges genutzt, wozu die Abdichtschalen spätestens kurz vor dem erwartenten Durchbruch des Tiefbauwerkzeuges an das Werkstück angelegt werden. Üblicherweise wird die Abdichteinrichtung vor Beginn des Bohrvorganges in die in Fig. 6 gezeigte Abdichtstellung gebracht. Auch die im Zusammenhang mit Fig. 6 erläuterte Abstützung erfolgt bevorzugt in dem aktuell bearbeiteten Bearbeitungsabschnitt. Prinzipiell ist es jedoch auch möglich, die Abstützung außerhalb des Bearbeitungsabschnittes durchzuführen. Bei nicht gezeigten Ausführungsformen kann hierzu eine gesonderte Abstützeinrichtung alternativ oder zusätzlich zu einer Abstützeinrichtung vorgesehen sein. Die Bohrungskontrolle kann wahlweise für jede Bohrung erfolgen oder, wenn beispielsweise alle Bohrungen mit dem gleichen Werkzeug hergestellt werden, nur an der letzten Bohrung des jeweiligen Werkstückes. Es ist auch möglich, bei Produktionsstart eine kompletten Prüfung und bei Folgeprüfungen nur eine Prüfung der jeweils letzten Bohrungen durchzuführen, um beispielsweise Programmfehler auszuschließen.

## Patentansprüche

1. Tiefbohreinrichtung zum Bohren von Bohrungen in Werkstücken, insbesondere Kurbelwellen, wobei die Bohrungen an unterschiedlichen Positionen und/oder in unterschiedlichen Ausrichtungen relativ zu einer Werkstücklängsachse einbringbar sind, mit
einer Tiefbohreinheit (3) mit mindestens einem Spindelstock (22), der mindestens eine durch einen Spindelantrieb (27) um eine Spindelachse (30) drehbaren Arbeitsspindel (26) zur Aufnahme eines parallel zur Spindelachse verschiebbaren Tiefbohrwerkzeuges (32) aufweist;
einer Werkstückhalteeinheit (40) mit einer ersten Teileinrichtung (43) zum Halten mindestens eines Werkstückes (41) und zur Drehung des Werkstückes um seine Werkstücklängsachse (42); und
einer zweiten Teileinrichtung (50) zur Drehung des Werkstücks (41) um eine senkrecht zur Werkstücklängsachse ausgerichtete Drehachse (49); und
Positioniereinrichtungen (4; 14; 51) zur Relativverschiebung von Werkstück und Tiefbohrwerkzeug
**dadurch gekennzeichnet, dass** der Werkstückhalteeinheit mindestens eine Manipulatoreinrichtung (100) zugeordnet ist, die innerhalb eines mehrere Bearbeitungsabschnitte des Werkstückes umfassenden Arbeitsbereiches (107) parallel zur Werkstücklängsachse (42) an vorgebbare Axialpositionen des Werkstückes verfahrbar ist.

2. Tiefbohreinrichtung nach Anspruch 1, **dadurch gekennzeichnet, dass** nur eine Manipulatoreinrichtung (100) vorgesehen ist, die innerhalb eines alle Bearbeitungsabschnitte des Werkstückes umfassenden Arbeitsbereichs (107) verfahrbar ist.

3. Tiefbohreinrichtung nach Anspruch 1 oder 2, **dadurch gekennzeichnet, dass** die Tiefbohreinrichtung eine computernumerische Steuerungseinrichtung aufweist und die Manipulatoreinrichtung in Abhängigkeit von Steuersignalen dieser Steuereinrichtung steuerbar ist, wobei die Steuerung der Manipulatoreinrichtung vorzugsweise in Abhängigkeit von Daten durchführbar ist, die zur Steuerung der Bohrungsprozesse verwendet werden.

4. Tiefbohreinrichtung nach einem der vorhergehenden Ansprüche, **dadurch gekennzeichnet, dass** die Manipulatoreinrichtung (100) mehrere Funktionseinheiten (120, 130) zur Durchführung unterschiedlicher Manipulationen an einem der Axialposition zugeordneten Bearbeitungsabschnitt des Werkstückes (41) aufweist.

5. Tiefbohreinrichtung nach einem der vorhergehenden Ansprüche, **dadurch gekennzeichnet, dass** die Manipulatoreinrichtung (100) mindestens eine Abdichteinrichtung (120) zur Abdichtung von Durchtrittsstellen von Tiefbohrwerkzeugen beim Bohren des Werkstückes aufweist.

6. Tiefbohreinrichtung nach Anspruch 5, **dadurch gekennzeichnet, dass** die Abdichteinrichtung (120) mindestens eine in einem Abdichtabschnitt an eine Werkstückmantelfläche über einen Umfangsabschnitt anpreßbare Abdichtschale (122, 123, 124) aufweist, wobei die Abdichteinrichtung (120) vorzugsweise für einen Abdichtabschnitt mehrere Abdichtschalen zur im wesentlichen lückenlosen Abdichtung des Abdichtabschnitts entlang des Werkstückumfanges aufweist.

7. Tiefbohreinrichtung nach einem der vorhergehenden Ansprüche, **dadurch gekennzeichnet, dass** die Manipulatoreinrichtung (100) mindestens eine Abstützeinrichtung (120) zur bedarfsweise einstellbaren Abstützung des Werkstückes im Bereich mindestens eines Bearbeitungsabschnittes aufweist.

8. Tiefbohreinrichtung nach Anspruch 7, **dadurch gekennzeichnet, dass** die Abstützeinrichtung mindestens ein Abstützorgan (123) aufweist, welches numerisch gesteuert und/oder manuell zum Werkstück bewegbar und in einem Abstützbereich an die Werkstückmantelfläche anpressbar ist, wobei das Abstützorgan vorzugsweise als Abstützschale (123) mit einer über einen Umfangsabschnitt an die Mantelfläche eines Werkstücks anlegbaren Abstützfläche ausgebildet ist.

9. Tiefbohreinrichtung nach Anspruch 7 oder 8, **dadurch gekennzeichnet, dass** das Abstützorgan (123), vorzugsweise auf der dem Tiefbohrwerkzeug abgewandten Seite, an das Werkstück (41) bis in eine Abstützstellung heranführbar und in der Abstützstellung derart festlegbar ist, dass das Abstützorgan im wesentlichen unbeweglich gehalten ist.

10. Tiefbohreinrichtung nach einem der vorhergehenden Ansprüche, **dadurch gekennzeichnet, dass** sie eine als Abstützeinrichtung ausgebildete Abdichteinrichtung (12) aufweist.

11. Tiefbohreinrichtung nach einem der vorhergehenden Ansprüche, **dadurch gekennzeichnet, dass** mindestens ein als Abstützorgan nutzbares Abdichtelement der Abdichteinrichtung (120) mit Hilfe eines beweglich ansteuerbaren Betätigungselements (128) in eine Abstützstellung bewegbar ist und dass eine Festlegungseinrichtung (127) zur Festlegung des Betätigungselements in der Abstützstellung vorgesehen ist, wobei die Festlegungseinrichtung vorzugsweise als Kiemmeinrichtung ausgebildet ist.

12. Tiefbohreinrichtung nach einem der vorhergehenden Ansprüche, **dadurch gekennzeichnet, dass** die Manipulatoreinrichtung (100) mindestens eine Bohrungsprüfeinrichtung (130) zur Prüfung eines Bohrungsdurchtritts an der dem Tiefbohrwerkzeug abgewandten Seite des Werkstückes aufweist, wobei die Bohrungsprüfeinrichtung vorzugsweise mittels computernumerischer Steuerung an den Ort eines vorgesehenen Bohrungsdurchtrittes verfahrbar ist.

13. Tiefbohreinrichtung nach Anspruch 12, **dadurch gekennzeichnet, dass** die Bohrungsprüfeinrichtung (130) als mechanisch arbeitende Tasteinrichtung ausgebildet ist, wobei sie vorzugsweise mindestens einen zum Eindringen in eine Durchtrittsbohrung dimensionierten Eintauchstift (135) sowie eine zugeordnete Einrichtung zur Erfassung des Eintauchens des Eintauchstiftes in eine Bohrung umfasst.

14. Tiefbohreinrichtung nach Anspruch 12 oder 13, **dadurch gekennzeichnet, dass** die Bohrungsprüfeinrichtung (130) derart konfiguriert ist, dass bei der Prüfung in Abhängigkeit vom Prüfergebnis ein vorzugsweise elektrisches Prüfsignal an eine Steuerung der Tiefbohreinrichtung abgebbar ist, wobei die Steuereinrichtung vorzugsweise so konfiguriert ist, dass ein Bohrprozess in Abhängigkeit von dem Prüfsignal steuerbar ist.

15. Tiefbohreinrichtung nach einem der vorhergehenden Ansprüche, **dadurch gekennzeichnet, dass** die erste Teileinrichtung (43) zum Halten mindestens eines Werkstückes (41) mit horizontal ausgerichteter Werkstücklängsachse (42) und zur Drehung des Werkstückes um die horizontal ausgerichtete Werkstücklängsachse (42) ausgebildet ist und dass die zweite Teileinrichtung (50) zur Drehung des Werkstücks (41) um eine vertikal ausgerichtete Drehachse (49) ausgebildet ist, wobei die zweite Teileinrichtung (50) vorzugsweise derart um die Drehachse (49) drehbar ist, dass das Werkstück in eine oder aus einer Ladeposition drehbar ist, die eine seitliche Be- und Entladung in horizontaler Richtung ermöglicht.

16. Tiefbohreinrichtung nach einem der vorhergehenden Ansprüche, **dadurch gekennzeichnet, dass** die Werkstückhalteeinheit (40) zur gleichzeitigen Aufnahme von mehreren, insbesondere zwei, gleichzeitig bearbeitbaren Werkstücken (41) ausgebildet ist und dass jedem Werkstück eine gesonderte Manipulatoreinrichtung (100) zugeordnet ist, wobei die Werkstücke vorzugsweise mit parallelen Werkstücklängsachsen (42) übereinander anordenbar sind.

## Claims

1. Deep drilling device for drilling holes in workpieces, in particular in crankshafts, it being possible to introduce the holes in various positions and/or in various orientations relative to the longitudinal axis of a workpiece, comprising a deep drilling unit (3) with at least one drill head (22) which includes at least one work spindle (26) rotatable about a spindle axis (30) by a spindle drive (27), for accommodating a deep drilling tool (32) which is displaceable parallel to the spindle axis; a workpiece holding unit (40) with a first partial device (43) for holding at least one workpiece (41) and for rotating the workpiece about its longitudinal axis (42); and a second partial device (50) for rotating the workpiece (41) about an axis of rotation (49) oriented perpendicularly to the axis of the workpiece; and positioning devices (4; 14; 51) for the relative displacement of workpiece and deep drilling tool, **characterised in that** at least one manipulator device (100) is allocated to the workpiece holding unit and may be moved at presettable axial positions of the workpiece, parallel to the longitudinal axis (42) of the workpiece within a working region (107) containing a plurality of machining portions of the workpiece.

2. Deep drilling device according to claim 1, **characterised in that** only one manipulator device (100) is provided which may be moved within a working region (107) containing all machining portions of the workpiece.

3. Deep drilling device according to either claim 1 or claim 2, **characterised in that** the deep drilling device comprises a computer-numeric control device and the manipulator device may be controlled as a function of control signals from this control device, the manipulator device being controllable preferably as a function of data which is used to control the drilling processes.

4. Deep drilling device according to any one of the preceding claims, **characterised in that** the manipulator device (100) comprises a plurality of functional units (120, 130) for carrying out various manipulations on a machining portion of the workpiece (41) associated with the axial position.

5. Deep drilling device according any one of the preceding claims, **characterised in that** the manipulator device (100) comprises at least one sealing device (120) to seal break-through points which are produced when deep drilling tools drill the workpiece.

6. Deep drilling device according to claim 5, **characterised in that** the sealing device (120) comprises at least one sealing dish (122, 123, 124) which may be pressed against a generated surface of the workpiece over a circumferential portion in a sealing portion, the sealing device (120) preferably comprising, for one sealing portion, a plurality of sealing dishes for substantially completely sealing the sealing portion along the circumference of the workpiece.

7. Deep drilling device according any one of the preceding claims, **characterised in that** the manipulator device (100) comprises at least one supporting device (120) in order to support the workpiece adjustably as required in the region of at least one machining portion.

8. Deep drilling device according to claim 7, **characterised in that** the supporting device comprises at least one supporting element (123) which may be moved toward the workpiece in a numerically controlled manner and/or manually and may be pressed onto the generated surface of the workpiece in a support region, the supporting element preferably being provided as a supporting dish (123) with a supporting surface which may be positioned against the generated surface of a workpiece over a portion of the circumference.

9. Deep drilling device according to either claim 7 or claim 8, **characterised in that** the supporting element (123) may be guided onto the workpiece (41) up to a support position, preferably on the side remote from the deep drilling tool, and may be fixed in the support position such that it is held substantially immovably.

10. Deep drilling device according any one of the preceding claims, **characterised in that** it comprises a sealing device (12) provided in the form of a supporting device.

11. Deep drilling device according any one of the preceding claims, **characterised in that** at least one sealing element of the sealing device (120) which may be used as a supporting element may be moved into a support position by means of an operating element (128), which may be movably activated, and **in that** a securing device (127) is provided for securing the operating element in the support position, the securing device preferably being provided in the form of a clamping device.

12. Deep drilling device according any one of the preceding claims, **characterised in that** the manipulator device (100) comprises at least one drilling check device (130) to check a drilling break-through on the side of the workpiece remote from the deep drilling tool, the drilling check device preferably being movable to the location of a resulting drilling break-through by means of a computer-numeric control.

13. Deep drilling device according to claim 12, **characterised in that** the drilling check device (130) is provided in the form of a mechanically operating feeling device, said device preferably comprising at least one insertion pin (135) configured for penetrating into a break-through hole, and an associated device to detect the insertion of the insertion pin into the hole.

14. Deep drilling device according to either claim 12 or claim 13, **characterised in that** the drilling check device (130) is configured such that during testing and as a function of the test result, a preferably electrical test signal may be delivered to a control device of the deep drilling device, the control device preferably being configured such that it is possible to control a drilling process as a function of the test signal.

15. Deep drilling device according any one of the preceding claims, **characterised in that** the first partial device (43) is configured to hold at least one workpiece (41) having a horizontally aligned longitudinal axis (42) and to rotate the workpiece about said horizontally aligned longitudinal axis (42), and **in that** the second partial device (50) is configured to rotate the workpiece (41) about a vertically aligned axis of rotation (49), the second partial device (50) preferably being rotatable about the axis of rotation (49) such that the workpiece may be rotated into or out of a loading position which allows a lateral loading and unloading in a horizontal direction.

16. Deep drilling device according any one of the preceding claims, **characterised in that** the workpiece holding unit (40) is configured to simultaneously accommodate a plurality of, in particular two, workpieces (41) which may be machined simultaneously and **in that** a separate manipulator device (100) is allocated to each workpiece, the workpieces preferably being positionable superimposed with parallel longitudinal axes (42).

## Revendications

1. Dispositif de perçage profond pour réaliser des perçages dans des pièces à oeuvrer, en particulier dans des vilebrequins, lesdits perçages devant être pratiqués dans des positions différentes et/ou avec des orientations différentes par rapport à un axe longitudinal de la pièce à oeuvrer, comprenant une unité de perçage profond (3) comprenant au moins un mandrin à broche (22) qui comprend au moins une broche d'entraînement (26) susceptible d'être mise en rotation par un entraînement de broche (27) autour d'un axe de broche (30), pour recevoir un outil de perçage profond (32) déplaçable en translation parallèlement à l'axe de broche ;
une unité de maintien de pièce (40) comprenant un premier moyen partiel (43) pour tenir au moins une pièce à oeuvrer (41) et pour faire tourner la pièce autour de son axe longitudinal (42) ; et un second moyen partiel (50) pour faire tourner la pièce à oeuvrer (41) autour d'un axe de rotation (49) orienté perpendiculairement à l'axe longitudinal de la pièce; et
des moyens de positionnement (4 ; 14 ; 51) pour effectuer une translation relative de la pièce et de l'outil de perçage profond,
**caractérisé en ce qu'**à l'unité de maintien de pièce est associé au moins un dispositif de manipulation (100) qui, à l'intérieur d'une zone de travail (107) comprenant plusieurs postes d'usinage de la pièce, est déplaçable en translation parallèlement à l'axe longitudinal (42) de la pièce dans des positions axiales prédéterminées de celle-ci.

2. Dispositif de perçage profond selon la revendication 1, **caractérisé en ce qu'**il est prévu un seul dispositif de manipulation (100) qui est déplaçable en translation à l'intérieur d'une zone de travail (107) qui comprend tous les postes d'usinage de la pièce à oeuvrer.

3. Dispositif de perçage profond selon la revendication 1 ou 2, **caractérisé en ce que** le dispositif de perçage profond comprend un dispositif de commande numérique assisté par ordinateur, et le dispositif de manipulation peut être commandé en fonction de signaux de commande provenant de ce dispositif de commande, la commande du dispositif de manipulation étant effectuée de préférence en fonction de données qui sont utilisées pour commander les processus de perçage.

4. Dispositif de perçage profond selon l'une des revendications précédentes, **caractérisé en ce que** le dispositif de manipulation (100) comprend plusieurs unités fonctionnelles (120, 130) pour exécuter différentes manipulations sur un poste d'usinage, associé à la position axiale, de la pièce à oeuvrer (41).

5. Dispositif de perçage profond selon l'une des revendications précédentes, **caractérisé en ce que** le dispositif de manipulation (100) comprend au moins un dispositif d'étanchement (120) pour étancher des emplacements de traversée d'outils de perçage profond lors du perçage de la pièce à oeuvrer.

6. Dispositif de perçage profond selon la revendication 5, **caractérisé en ce que** le dispositif d'étanchement (120) comprend au moins une coque d'étanchement (122, 123, 124) susceptible d'être pressée, dans un tronçon d'étanchement, contre une surface enveloppe de la pièce à oeuvrer sur un tronçon de périphérie, ledit dispositif d'étanchement (120) comprenant de préférence plusieurs coques d'étanchement pour un tronçon d'étanchement, pour assurer un étanchement essentiellement sans lacune du tronçon d'étanchement le long de la périphérie de la pièce à oeuvrer.

7. Dispositif de perçage profond selon l'une des revendications précédentes, **caractérisé en ce que** le dispositif de manipulation (100) comprend au moins un dispositif de soutien (120) pour soutenir, en cas de besoin de manière réglable, la pièce à oeuvrer dans la région d'au moins un poste d'usinage.

8. Dispositif de perçage profond selon la revendication 7, **caractérisé en ce que** le dispositif de soutien comprend au moins un organe de soutien (123) qui est déplaçable par une commande numérique et/ou manuellement vers la pièce à oeuvrer et qui peut être pressé dans une zone de soutien contre la surface enveloppe de la pièce à oeuvrer, ledit organe de soutien étant de préférence réalisé sous forme de coque de soutien (123) avec une surface de soutien applicable, sur un tronçon de périphérie, contre la surface enveloppe d'une pièce à oeuvrer.

9. Dispositif de perçage profond selon la revendication 7 ou 8, **caractérisé en ce que** l'organe de soutien (123), de préférence sur le côté détourné de l'outil de perçage profond, peut être approché de la pièce à oeuvrer (41) jusque dans une position de soutien et, dans la position de soutien, il peut être immobilisé de telle façon que l'organe de soutien est maintenu essentiellement immobile.

10. Dispositif de perçage profond selon l'une des revendications précédentes, **caractérisé en ce qu'**il comprend un dispositif d'étanchement (12) réalisé à titre de dispositif de soutien.

11. Dispositif de perçage profond selon l'une des revendications précédentes, **caractérisé en ce qu'**au moins un élément d'étanchement du dispositif d'étanchement (120), utilisable à titre d'organe de soutien, est déplaçable à l'aide d'un élément d'actionnement (128) commandé mobile, jusque dans une position de soutien, et **en ce qu'**il est prévu un dispositif d'immobilisation (127) pour immobiliser l'élément d'actionnement dans la position de soutien, ledit dispositif d'immobilisation étant réalisé de préférence sous forme d'un dispositif de serrage.

12. Dispositif de perçage profond selon l'une des revendications précédentes, **caractérisé en ce que** le dispositif de manipulation (100) comprend au moins un dispositif de contrôle de perçage (130) pour contrôler une traversée de perçage, sur le côté de la pièce à oeuvrer détourné de l'outil de perçage profond, ledit dispositif de contrôle de perçage étant de préférence déplaçable au moyen d'une commande numérique assistée par ordinateur à l'emplacement d'une traversée de perçage prévue.

13. Dispositif de perçage profond selon la revendication 12, **caractérisé en ce que** le dispositif de contrôle de perçage (130) est réalisé sous forme de dispositif de palpage fonctionnant de façon mécanique, lequel comprend de préférence au moins une tige plongeante (135) de dimension choisie pour pénétrer dans un perçage traversant, ainsi que des moyens associés pour détecter la plongée de la tige plongeante dans un perçage.

14. Dispositif de perçage profond selon la revendication 12 ou 13, **caractérisé en ce que** le dispositif de contrôle de perçage (130) est configuré de telle façon que lors du contrôle, en fonction du résultat de contrôle, un signal de contrôle de préférence électrique peut être fourni à une unité de commande du dispositif de perçage profond, le dispositif de commande étant de préférence ainsi configuré qu'un processus de perçage peut être commandé en fonction du signal de contrôle.

15. Dispositif de perçage profond selon l'une des revendications précédentes, **caractérisé en ce que** le premier moyen partiel (43) est réalisé pour maintenir au moins une pièce à oeuvrer (41) avec son axe longitudinal (42) orienté horizontalement et pour mettre en rotation la pièce à oeuvrer autour de son axe longitudinal (42) orienté horizontalement, et **en ce que** le second moyen partiel (50) est réalisé pour mettre en rotation la pièce à oeuvrer (41) autour d'un axe de rotation (49) orienté verticalement, le second moyen partiel (50) étant capable de tourner autour de l'axe de rotation (49) de préférence de telle manière que la pièce à oeuvrer peut être tournée vers ou depuis une position de chargement, qui permet un chargement et un déchargement latéral en direction horizontale.

16. Dispositif de perçage profond selon l'une des revendications précédentes, **caractérisé en ce que** l'unité de maintien de pièce (40) est réalisée pour recevoir simultanément plusieurs pièces à oeuvrer (41) susceptibles d'être usinées simultanément, en particulier deux pièces, et **en ce qu'**un dispositif de manipulation séparé (100) est associé à chaque pièce à oeuvrer, et lesdites pièces à oeuvrer peuvent être agencées les unes au-dessus des autres de préférence avec des axes longitudinaux (42) parallèles.
